# EUROPÄISCHE PATENTSCHRIFT

(11) **EP 1 875 641 B1**
(45) Veröffentlichungstag und Bekanntmachung des Hinweises auf die Patenterteilung: **08.12.2010**
(21) Anmeldenummer: 06725744.4
(22) Anmeldetag: 13.04.2006
(51) Int. Cl.: H04J 3/06, H04L 12/403, H04L 12/42, H04L 12/44, H04L 12/46

(54) **VORRICHTUNG ZUR SYNCHRONISATION ZWEIER BUSSYSTEME SOWIE ANORDNUNG AUS ZWEI BUSSYSTEMEN**
DEVICE FOR SYNCHRONISING TWO BUS SYSTEMS AND ARRANGEMENT CONSISTING OF TWO BUS SYSTEMS
DISPOSITIF POUR SYNCHRONISER DEUX SYSTEMES DE BUS ET ENSEMBLE COMPRENANT DEUX SYSTEMES DE BUS

(30) Priorität: 22.04.2005 DE 102005018837
(43) Veröffentlichungstag der Anmeldung: 09.01.2008
(73) Patentinhaber: ROBERT BOSCH GMBH, 70442 Stuttgart (DE)
(72) Erfinder: HARTWICH, Florian, 72762 Reutlingen (DE); TAUBE, Jan, 72760 Reutlingen (DE)
(86) Internationale Anmeldenummer: PCT/EP2006/061575
(87) Internationale Veröffentlichungsnummer: WO 2006/111499

(56) Entgegenhaltungen:
- EP-A- 0 942 556
- EP-A- 1 047 213
- WO-A-2005/013523

## Beschreibung

### Stand der Technik

Die Erfindung geht aus von einer Vorrichtung zur Synchronisation zweier Bussysteme sowie einer entsprechenden Anordnung aus zwei Bussystemen, bei denen eine zeitliche Steuerung durch Referenznachrichten erfolgt gemäß dem Oberbegriff der unabhängigen Ansprüche.

Eine solche Referenznachricht zur Erzeugung von Basiszyklen im Rahmen einer zeitgesteuerten Kommunikation auf einem Bussystem wird beispielsweise bei FlexRay oder auch bei TTCAN verwendet. Solche Bussysteme sind notwendig, da die Vernetzung von Steuergeräten, Sensorik und Aktuatorik in den letzten Jahren beim Bau von modernen Kraftfahrzeugen oder auch im Maschinenbau insbesondere im Werkzeugmaschinenbereich als auch in der Automatisierung drastisch zugenommen hat. Synergieeffekte durch Verteilung von Funktionen auf mehrere Steuergeräte können dabei erzielt werden. Die Kommunikation zwischen verschiedenen Stationen solcher verteilten Systeme findet somit mehr und mehr über ein Bussystem oder auch über mehrere verkoppelte Bussysteme statt. Der Kommunikationsverkehr auf den Bussystemen, Zugriffs- und Empfangsmechanismen sowie Fehlerbehandlung werden über ein Protokoll geregelt. Ein Protokoll, beispielsweise im Kfz-Bereich etabliert, ist das CAN-Protokoll (controller area network). Dieses ist ein ereignisgesteuertes Protokoll, d. h. Protokollaktivitäten wie das Senden einer Nachricht werden durch Ereignisse iniziiert, die ihren Ursprung außerhalb des Kommunikationssystems, also des Bussystems haben. Es handelt sich dabei um ein ereignisgesteuertes Bussystem, welches insbesondere auch durch externe Ereignisse getriggert werden kann. Dadurch ist das CAN-Protokoll sehr flexibel, und ein Hinzufügen weiterer Teilnehmer und Nachrichten ist damit problemlos möglich.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen, in denen ein Sender exklusives Senderecht hat. Das Protokoll ist vergleichsweise unflexibel; ein Hinzufügen von neuen Knoten ist nur dann möglich, wenn zuvor schon die entsprechenden Zeitbereiche freigelassen wurden. Dieser Umstand erzwingt, die Nachrichtenreihenfolgen schon vor Inbetriebnahme festzusetzen. Dabei wird also ein Fahrplan erstellt, der den Anforderungen der Nachrichten bezüglich Wiederholrate, Redundanz, Deadlines usw. genügen muss. Die Positionierung der Nachrichten muss dabei innerhalb der Sendeperioden auf die Applikationen abgestimmt werden, die die Nachrichteninhalte produzieren, um die Latenzen zwischen Applikation und Sendezeitpunkt minimal zu halten. Wenn diese Abstimmung nicht erfolgt, würde der Vorteil der zeitgesteuerten Übermittlung, also minimale Latenz-Jitter beim Senden der Nachrichten am Bus zerstört. Es werden somit hohe Anforderungen an die Planungspools bei rein zeitgesteuertem Ansatz gestellt.

Der im ISO 11898-4 Standard-Draft aus 2003 (ISO/TC22/SC3) gezeigte Lösungsansatz eines zeitgesteuerten Controller Area Networks, dem sogenannten TTCAN (time triggered controller area network) genügt den oben skizzierten Forderungen nach zeitgesteuerter Kommunikation sowie den Forderungen nach einem gewissen Maß an Flexibilität. Der TTCAN erfüllt dies durch den Aufbau von Kommunikationsrunden, sogenannten Basiszyklen (basic cycle) durch Senden einer Referenznachricht durch den Zeitgeber oder Zeitmaster, den sogenannten Time Master. Diese Basiszyklen werden dann ihrerseits in sogenannte exklusive Zeitfenster für periodische Nachrichten bestimmter Kommunikationsteilnehmer und in sogenannte arbitrierende Zeitfenster für spontane Nachrichten mehrerer Kommunikationsteilnehmer aufgeteilt.

So wird im Weiteren nicht nur von der Synchronisierung wenigstens zweier TTCAN-Bussysteme oder Netzwerke ausgegangen, sondern ebenso von anderen bereits genannten vergleichbaren Bussystemen wie z. B. dem FlexRay, wobei auch eine Synchronisation gemischter, also unterschiedlicher Bussysteme, gewährleistet sein soll.

In solchen Systemen wird die Kommunikationsrunde, wie bereits erwähnt, durch einen Basiszyklus bestimmt, also durch einen Zeitgeber oder einen ersten Teilnehmer, der wiederholt eine Referenznachricht in wenigstens einem vorgebbaren zeitlichen Abstand über das Bussystem überträgt, wobei die Referenznachricht durch eine zeitliche Triggerinformation ausgelöst wird, wenn eine Zeitinformation eine der Triggerinformation zugeordnete Zeitmarke erreicht. Die Zeitinformation im TTCAN ist beispielsweise die Zykluszeit oder Cycle Time, welche durch die lokale Zeit, also die lokale Uhr des Zeitgebers oder Zeitmasters oder Time Masters sowie durch die Referenznachricht vorgegeben ist. Wird durch diese Zeitinformation, also die Zykluszeit des TTCAN, eine bestimmte Zeitmarke erreicht, so wird immer bei Erreichen dieser Zeitmarke ein Trigger ausgelöst, um die jeweilige Referenznachricht zu starten. Dadurch gibt der Zeitmaster im Bussystem die Zeit für das Bussystem entsprechend dem Basiszyklus vor. Soll nun eine Verschiebung eines solchen Basiszyklus erfolgen, bietet z. B. das TTCAN-Protokoll die Möglichkeit, die Kommunikation durch Setzen eines Bit in einer solchen Referenznachricht zu verschieben. Eine solche Verschiebung ist insbesondere notwendig, um z. B. den TTCAN-Bus auf die Phase, insbesondere einer externen Zeitbasis, zu synchronisieren, beispielsweise wenn im TTCAN die Event-Synchronized-Time-Triggered-Communication-Option verwendet wird.

D. h. zeitgesteuerte Netzwerke oder Bussysteme wie eben genannt der TTCAN oder auch FlexRay bieten meist die Möglichkeit, die Kommunikation auf die Phase einer externen Zeitbasis wie beispielsweise auch eines weiteren zeitgesteuerten Netzwerks oder Bussystems zu synchronisieren. Das gängigste Verfahren bislang, bei dem aber auch keine gemischte Synchronisation, also verschiedener unterschiedlicher Bussysteme durchgeführt wird, ist ein Verfahren, das mehrere Aktionen des Host-Controllers erfordert. Zuerst muss der Host durch das Setzen entsprechender vorgesehener Bit/Bitfelder in einer Referenznachricht oder durch das Senden einer definierten Nachricht allen Knoten respektive Teilnehmern mitteilen, dass nach Abschluss des Kommunikationszyklus ein Zeitabstand, ein sogenanntes Time-Gap eingeführt wird. Anschließend muss die Host-CPU warten, bis das Time-Gap begonnen hat. Die nächste Referenznachricht wird dann durch das Aktivieren des Time-Triggers synchronisiert gestartet.

So zeigt auch die WO 2005/013523 A1 eine Bussynchronisation für die in der verwendeten Bridge durch Messungen eine Frequenz- und Phaseninformation ermittelt wird, die die Zeitinformationen der Netzwerke darstellen. Aufgrund von Clock-Toleranzen und unterschiedlichen Startbedingungen können diese Zeitbasen auseinander laufen. Wird der Versatz zwischen beiden Netzwerken zu groß, ist eine Anpassung einer Netzwerkzeit erforderlich. Diese wird mit den ermittelten Phasen- und Frequenzinformationen durchgeführt. Dazu werden diese an die anderen Knoten im Netzwerk über die Busleitung versandt, damit sie ihre interne Zeit anpassen (Anpassung abh. von Phasen- und Frequenzinformation) können. Weitere Ansätze sind in den Dokumenten EP 1047213 A2 und EP 0942556 A2 beschrieben.

Nachteilig bei einem solch bekannten Verfahren ist allerdings, dass immer ein Eingriff des Host-Controllers oder Prozessors erfolgt, so dass bei der Synchronisierung mehrerer Netzwerke respektive Bussystemen wenigstens ein Teilnehmerprozessor stark belastet wird und eine gewisse Abhängigkeit von Software-Latenzzeiten entsteht.

Es ist daher Aufgabe der Erfindung, eine allgemeine Vorrichtung zu beschreiben, wie sich mehrere autonome Protokollcontroller als Kommunikationsbausteine und damit die diesen zugeordneten Bussysteme auf eine gemeinsame Zeitbasis synchronisieren, ohne erforderliche Zugriffe eines Teilnehmerprozessors. D. h. die Synchronisation der Bussysteme soll ohne direkte Kontrolle durch den verwendeten Prozessor und unabhängig von Softwarelatenzzeiten erfolgen.

### Vorteile der Erfindung

Die Erfindung geht aus von einer Vorrichtung gemäß Anspruch 1 zur Synchronisation wenigstens zweier Bussysteme, wobei in der Vorrichtung ein erster Kommunikationsbaustein für ein erstes Bussystem und ein zweiter Kommunikationsbaustein für ein zweites Bussystem vorgesehen ist und eine erste Triggerinformation vorliegt, durch welche im ersten Kommunikationsbaustein des ersten Bussystem ein Triggersignal ausgelöst wird, wobei vorteilhafter Weise der erste und zweite Kommunikationsbaustein in Verbindung stehen, so dass die erste Triggerinformation an den zweiten Kommunikationsbaustein übertragen wird und aus der ersten Triggerinformation ein Zeitinformationswert ermittelt wird und dieser Zeitinformationswert mit einer zweiten Zeitmarke des zweiten Bussystem verglichen wird, wobei ein Zeitunterschied ermittelt wird und die nächste Referenznachricht im zweiten Bussystem abhängig von der zweiten Zeitmarke und dem Zeitunterschied ausgelöst wird.

Damit ist eine allgemeine Vorrichtung möglich, wie sich mehrere autonome Protokollcontroller oder auch hier genannt Kommunikationsbausteine auf eine gemeinsame Zeitbasis eines ersten Bussystems synchronisieren, ohne dass Zugriffe eines Prozessors, eines Hosts oder Teilnehmers erforderlich sind. D. h. die erfindungsgemäße Synchronisation erfolgt ohne direkte Kontrolle durch den verwendeten Prozessor des Teilnehmers oder Hosts und damit auch unabhängig von

Softwarelatenzzeiten. D. h. zweckmäßiger Weise werden in vernetzten Steuergeräten oder Steuergeräteanordnungen der Automatisierungs- und Kraftfahrzeugtechnik oder auch anderen Bereichen, die mehrere unabhängige zeitgesteuerte Bussysteme miteinander verbinden, mindestens zwei Bussysteme oder Netzwerke mit einer gemeinsamen Zeitbasis, also insbesondere einer gemeinsamen globalen Zeit verwendet, um Dateninkonsistenzen oder die Übermittlung veralteter Daten zu vermeiden. Dadurch können auch gleichzeitig Interrupts, also Unterbrechungsanforderungen generiert oder auch gleichzeitig Aufgaben von mehreren Teilnehmern getrennter und unabhängiger Bussysteme oder Netzwerke ausgeführt werden. Die erfindungsgemäße Vorrichtung erlaubt dazu eine viel genauere Einstellung der Zeitbasis durch eine automatische Korrektur bzw. Synchronisation.

Zweckmäßiger Weise entspricht dabei der erste Kommunikationsbaustein einem Zeitmaster des ersten Bussystems und ist derart ausgebildet, dass er das Triggersignal wiederholt in einem vorgebbaren zeitlichen Abstand ausgelöst durch die erste Triggerinformation überträgt, wenn eine erste Zeitinformation eine der ersten Triggerinformation zugeordnete erste Zeitmarke erreicht.

Dazu ist nun vorteilhafter Weise ein erster Speicherbereich, insbesondere ein Register im zweiten Kommunikationsbaustein vorgesehen, in welches der zweite Zeitinformationswert, der sich abhängig von der Triggerinformation ergibt, abgelegt wird. Ebenso ist ein zweiter Speicherbereich insbesondere ebenfalls als Register vorgesehen, in welchem die zweite Zeitmarke des zweiten Bussystems abgelegt wird. Des Weiteren ist zweckmäßiger Weise ein dritter Speicherbereich insbesondere ebenfalls als Register vorgesehen, in welchem der Zeitunterschied, der sich aus dem Zeitinformationswert und der Zeitmarke ergibt, abgelegt wird.

Dabei sind eine Vielzahl von Konfigurationen denkbar bezüglich der Zuordnung von Time-Master-Funktionalität bzw. Slave-Funktionalität bezogen auf die Kommunikationsbausteine. In einer Ausführungsform ist es z. B. zweckmäßig, dass der zweite Kommunikationsbaustein einem Zeitmaster oder Time Master des zweiten Bussystems entspricht und derart ausgebildet ist, dass dieser die nächste Referenznachricht im zweiten Bussystem auslöst, wenn eine zweite Zeitinformation die Summe aus der zweiten Zeitmarke und dem Zeitunterschied erreicht. Somit ist hier in diesem Zusammenhang so zu verstehen, dass abhängig davon, ob der Zeitunterschied positiv oder negativ ist, eben eine Verlängerung oder Verkürzung erfolgt, dass also der Begriff Summe auch die Differenzbildung bei negativem Zeitunterschied einschließt. Dies gilt im Übrigen auch für die weiteren Auslührungen in der Anmeldung. Der Kommunikationsbaustein des ersten Bussystems kann hingegen einem Zeitmaster oder Time Master, einem potentiellen Time Master oder einem Time Slave entsprechen.

In einer zweiten Ausführungsform ist vorgesehen, dass der zweite Kommunikationsbaustein einem Slave im zweiten Bussystem entspricht, also keinen Zeitmaster darstellt und derart ausgebildet ist, dass er eine zweite Triggerinformation an einen dritten Kommunikationsbaustein, der nun Zeitmaster des zweiten Bussystems ist, überträgt. Zweckmäßiger Weise versendet der zweite Kommunikationsbaustein im zweiten Netzwerk eine vordefinierte Nachricht, die die entsprechende Zeitinformation, die Zeitdifferenz, enthält an diesen dritten Kommunikationsbaustein, der Zeitmaster des zweiten Bussystems ist.

Bei der erfindungsgemäßen Vorrichtung ist vorteilhafter Weise der erste und zweite Kommunikationsbaustein über einen direkten Verbindungsweg derart verbunden, dass die bereits genannte erste Triggerinformation direkt in ein Register des zweiten Kommunikationsbausteins eingeschrieben wird. Diese direkte Verbindung ist vorteilhafter Weise als Punkt-zu-Punkt-Verbindung ausgeführt und insbesondere zweckmäßiger Weise als serielle Begleitung. Diese Triggerleitung, also die Verbindung zwischen erstem und zweitem Kommunikationsbaustein, kann zum Einen als Kaskadenring, also als ringförmige Verbindung oder auch insbesondere bei mehreren Kommunikationsbausteinen sternförmig als eine Mehrzahl von Punkt-zu-Punkt-Verbindungen ausgeführt sein.

Vorteilhaft ist ebenso eine Anordnung aus wenigstens zwei Bussystemen gemäß Anspruch 12 mit einer Vorrichtung zur Synchronisation der wenigstens zwei Bussysteme wie beschrieben mit einem ersten Kommunikationsbaustein an einem ersten Bussystem und einem zweiten Kommunikationsbaustein an einem zweiten Bussystem, wobei in dem ersten Kommunikationsbaustein eine erste Triggerinformation vorliegt, durch welche im ersten Bussystem ein Triggersignal ausgelöst wird, wobei der erste und der zweite Kommunikationsbaustein eben so in Verbindung stehen, dass die erste Triggerinformation an den zweiten Kommunikationsbaustein übertragen wird und der zweite Kommunikationsbaustein derart ausgebildet ist, dass aus der ersten Triggerinformation ein Zeitinformationswert ermittelt und dieser Zeitinformationswert mit einer zweiten Zeitmarke des zweiten Bussystems verglichen wird, wobei ein Zeitunterschied ermittelt wird und die nächste Referenznachricht im zweiten Bussystem abhängig von der zweiten Zeitmarke und dem Zeitunterschied ausgelöst wird.

Weitere Vorteile und vorteilhafte Ausgestaltungen ergeben sich aus der Beschreibung sowie den Merkmalen der Ansprüche.

### Zeichnung

Die Erfindung wird nachfolgend anhand der in der Zeichnung dargestellten Figuren näher erläutert. Dabei zeigt
Figur 1 eine Anordnung aus zwei Bussystemen und einer Vorrichtung als Gateway zwischen den Bussystemen.
Figur 2 zeigt eine erfindungsgemäße Darstellung der Gateway-Vorrichtung zwischen den Bussystemen.
Figur 3 zeigt eine Blockdarstellung zur erfindungsgemäßen Synchronisierung zweier Bussysteme.
Figur 4 schließlich zeigt einen Signalflussplan mit den Referenznachrichten und deren Verschiebung zur Synchronisierung der Bussysteme.

Die Erfindung wird nun nachfolgend anhand der Ausführungsbeispiele näher erläutert.

### Ausführungsbeispiele

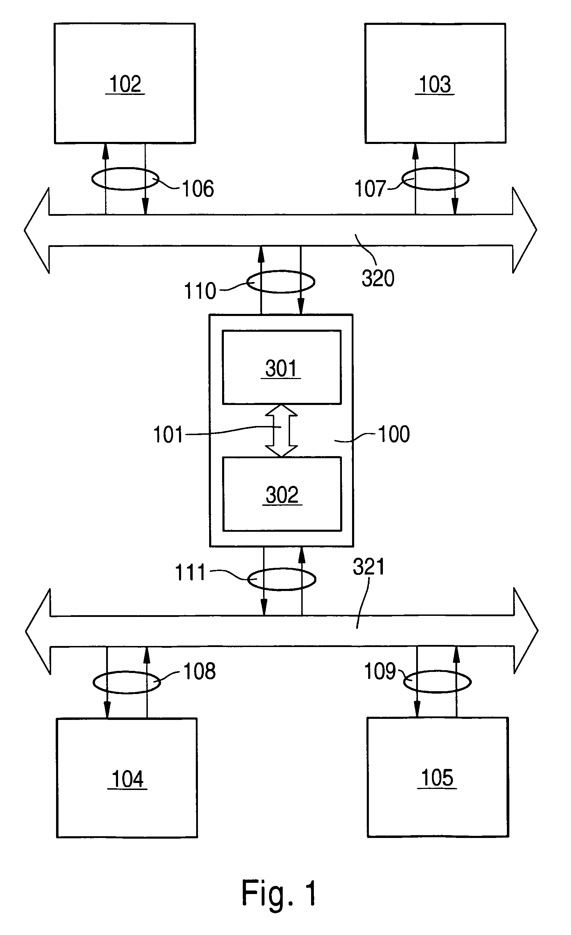

Figur 1 zeigt eine Anordnung aus zwei Bussystemen 320 und 321 und einer Vorrichtung als Gateway zwischen den Bussystemen. Bussystem 320 weist dabei die Teilnehmer oder Knoten 102 und 103 auf, welche über bidirektionale Verbindungen 106 bzw. 107 an das Bussystem angebunden sind. Ebenso ist ein zweites Bussystem 321 dargestellt, welches die Teilnehmer 104 und 105 aufweist und über die bidirektionalen Schnittstellen 108 und 109 mit diesen Teilnehmern verbunden ist.

Mit 100 ist ein Gateway-Teilnehmer dargestellt, durch welchen die Bussysteme 320 und 321 miteinander in Verbindung stehen. Dies erfolgt über die bidirektionale Schnittstelle 110 mit dem Bussystem 320 und über die bidirektionale Schnittstelle 111 mit dem Bussystem 321. Mit 301 und 302 sind Kommunikationsbausteine dargestellt, wobei der erste Kommunikationsbaustein 301 mit dem Bussystem 320 gekoppelt ist, also für dieses Bussystem eingesetzt ist und der zweite Kommunikationsbaustein 302 mit dem Bussystem 321 gekoppelt ist, somit für dieses Bussystem zuständig ist. Über eine schematische Verbindung 101, die sowohl serielle Verbindungen und/oder parallele Verbindungen aufweisen kann, sind die beiden Kommunikationsbausteine 301 und 302 direkt miteinander im Gateway-Teilnehmer 100 verbunden.

Wie bereits in der Beschreibungseinleitung dargestellt, gibt es eine Vielzahl unterschiedlicher Übertragungstechnologien und damit Arten von Bussystemen. So müssen mehrere Bussysteme gleicher oder unterschiedlicher Art miteinander verbunden werden. Dazu dient eine solche Busschnittstelleneinheit, also ein so genanntes Gateway. Ein solches Gateway ist somit eine Schnittstelleneinheit zwischen verschiedenen Bussystemen, die von gleicher oder unterschiedlicher Art sein können, wobei ein solches Gateway Informationen wie z. B. Botschaften oder auch bei uns erfindungsgemäß Triggerinfonnationen von einem Bussystem auf ein oder mehrere andere Bussysteme weiterleitet. Würde nun der Austausch der Informationen über die Prozessorschnittstelle, also den Prozessor des jeweiligen Teilnehmers erfolgen, würde dieser durch diesen Datenaustausch zusätzlich zu den zum Teilnehmer selbst zu übertragenden Informationen stark belastet, wodurch sich zusammen mit der daraus ergebenden Übertragungsstruktur eine unter Umständen relativ niedrige Datenübertragungsgeschwindigkeit ergeben würde. Um diese Belastung des Prozessors zu vermeiden, wird nun von der dargestellten erfindungsgemäßen Anordnung sowie der in der Anordnung enthaltenen Vorrichtung ausgegangen, um die vorgenannten Vorteile zu erzielen.

Dabei sind nun mehrere Systemkonfigurationen erfindungsgemäß denkbar, z. B. eine Konfiguration zur 1, wo zur automatischen Synchronisation ein Zeitmaster oder Timemaster verwendet wird, der die globale Zeit seines Bussystems oder Netzwerkes steuert, eben durch Aussenden der entsprechenden Referenznachrichten, z. B. hier der Kommunikationsbaustein 302, während der erste Kommunikationscontroller, also z. B. hier Kommunikationsbaustein 301 des Gateway-Teilnehmers 100 als Zeitmaster oder auch als Slave ausgebildet sein kann und die Funktion des Gateway-Masters bzw Masternetzwerkes übernimmt. Der zweite Kommunikationsbaustein 302 und somit das zweite Bussystem 321 synchronisiert sich auf das erste Bussystem 320 und übernimmt dessen globale Zeit.

In einer zweiten Konfiguration kann der Teilnehmer des Bussystems, auf das sich mindestens ein weiteres Bussystem synchronisieren soll, also hier Kommunikationsbaustein 301 als Zeitmaster oder als Slave eingesetzt werden. Der zweite Kommunikationsbaustein 302 wird in diesem Aufbau entsprechend der zweiten Konfiguration ebenfalls als Slave konfiguriert. Um die globale Zeit für das Bussystem, also hier Bussystem 321 einzustellen, muss eine ermittelte Abweichung der Zeit durch das Senden einer entsprechenden Nachricht an den Zeitmaster des zweiten Bussystems, also einen dritten Komnunikationsteilnehmer oder Kommunikationsbaustein am Bussystem 321 übermittelt werden. D. h. also, dass die Information dann bei Slave-Konfiguration des Bausteins 302 nur durchgereicht zum eigentlichen Zeitmaster des Bussystems 321 wird und dieser dann den folgenden Kommunikationszyklus, also insbesondere Basiszyklus mit einer aktualisierten Zeitmarke mit Aussenden der Referenznachricht für den Bus 321 beginnt.

D. h. also, die Kommunikationsbausteine 301 und 302 können zum Einen jeweils als Zeitmaster des entsprechenden Bussystems 320 respektive 321 ausgebildet sein, aber auch wie in den Konfigurationen beschrieben, lediglich Slave-Funktionen haben und die Informationen vom eigentlichen Zeitmaster des jeweiligen Bussystems empfangen respektive an diesen weiterreichen.

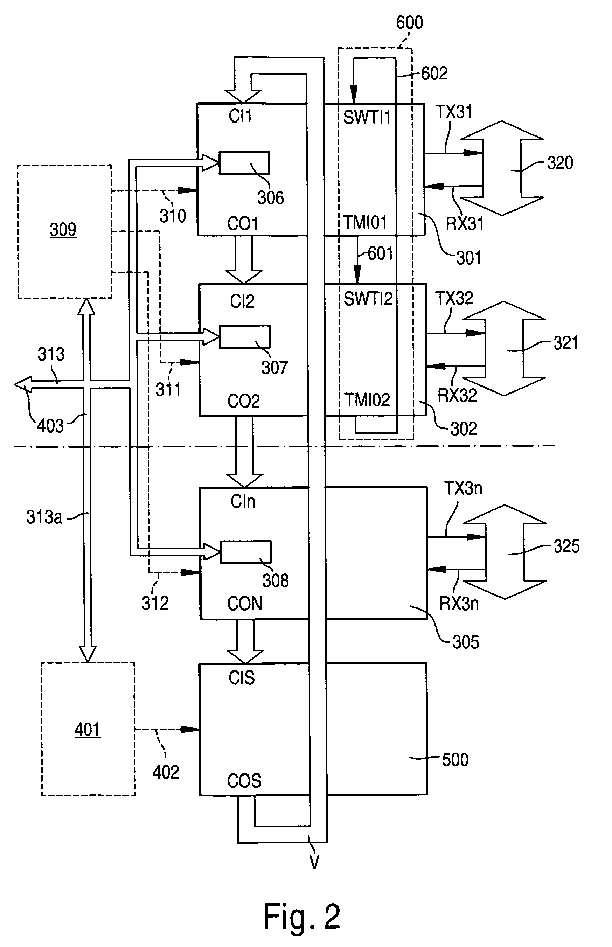

In Figur 2 ist nun ein solches Gateway-Modul oder eine solche Gateway-Vorrichtung ausführlicher dargestellt, insbesondere auch z. B. um nicht zeitgesteuerte Bussysteme und die entsprechenden Kommunikationsbausteine erweitert sowie einen weiteren optionalen Baustein zur Steuerung von Verbindungen zwischen den Kommunikationsbausteinen, die eben beispielhaft in Figur 1 mit 101 als schematische Verbindung dargestellt sind.

Dabei sind z. B. mit Kommunikationsbaustein 301 und 302 Bausteine zeitgesteuerter Bussysteme dargestellt. Mit 305 beispielsweise ist ein Kommunikationsbaustein dargestellt für ein nicht zeitgesteuertes System wie z. B. für einen normalen CAN-Bus. Dabei sind die Kommunikationsbausteine für die zeitgesteuerten Bussysteme durch eine strichpunktierte Linie von den Kommunikationsbausteinen für die nicht zeitgesteuerten Bussysteme abgetrennt. In diesem beispielhaften Gateway nach Figur 2 sind somit Kommunikationsbausteine für zeitgesteuerte Bussysteme ebenso enthalten wie Kommunikationsbausteine für nicht zeitgesteuerte Bussysteme, was aber wirklich nur beispielhaft zu verstehen ist, so dass auch erfindungsgemäß eine Gateway-Anordnung vorstellbar ist entsprechend Figur 1, die nur Kommunikationsbausteine für zeitgesteuerte Bussysteme enthält, da nur zeitgesteuerte Bussysteme verbunden werden (oberhalb der strichpunktierten Linie dargestellt in Figur 2). Jeder der Kommunikationsbausteine in Figur 2 besitzt einen Sendeausgang (TX31, TX32 bis TX3n, wobei n eine natürliche Zahl ist) sowie einen Empfangseingang (RX31, RX32 und RX3n, wobei hier ebenfalls n eine natürliche Zahl ist) zur Verbindung mit einem entsprechenden Bussystem 320, 321 und 325. Weiterhin ist mit 500 eine Datenintegrationseinheit, eine so genannte Data-Integration-Unit DIU dargestellt.

Alle Kommunikationsbausteine sowie die Datenintegrationseinheit 500 sind über den Übertragungsweg V verbunden, der diese Kommunikationsbausteine und das DIU ringförmig verbindet. Damit ist eine kaskadierte Verbindung V geschaffen, durch die eine schnelle und direkte Weiterleitung bzw. Kommunikation der Kommunikationsbausteine im Gateway ermöglicht wird. Dazu sind diese Kommunikationsbausteine durch einen kaskadierten Ausgang zu einem kaskadierten Eingang über den Übertragungsweg V verbunden. So ist der Kommunikationsbaustein 301 über seinen Kaskadenausgang (CO1, Cascade Output 1) mit dem Kommunikationsbaustein 302 über dessen Eingang C12 Cascade Input 2) verbunden. Ebenso Baustein 302 mit Baustein 305 über CO2 über CIn und 305 mit 500 über CON zu CIS. Für diesen Übertragungsweg V ist aber eine Sternschaltung oder Ähnliches ebenso denkbar. D. h. normalerweise erfordert der Datentransfer, also die Übertragung von Daten und/oder Botschaft oder Informationen zwischen den Kommunikationsbausteinen im Gateway eine Vielzahl von Lese- und Schreiboperationen, die normalerweise über den Hostprozessor abgewickelt werden müssen. Dazu dient normalerweise der CPU-Bus 403, der Host-CPU, hier nicht dargestellt, mit den Kommunikationsbausteinen 301, 302 und 305 verbindet. Dies würde aber die Host-CPU, also den Teilnehmer, stark belasten und damit die Übertragung verlangsamen. Um dies zu verbessern, ist hier nun dieser kaskadierte Übertragungsweg V vorgesehen, so dass eine schnelle Informationsübertragung zwischen den Kommunikationsbausteinen ohne Host-Belastung möglich ist. D. h. allein für die Datenübertragung ist ein zweiter Datenpfad, eben hier V vorgesehen, der die Kommunikationsbausteine im Gateway verbindet. Damit können nun vorgebbare Daten und/oder Botschaften des ersten Datenpfades, also des CPU-Busses 403 direkt über den zusätzlichen zweiten Datenpfad geleitet werden, also V, ohne die Host-CPU entsprechend dem normalen Datenweg zu belasten. Die Steuerung dieses zweiten Datenpfades, also zum Einen das Übertragen bzw. Leiten der Daten und/oder Botschaft über den zweiten Datenpfad V sowie insbesondere die Auswahl oder Vorgabe der vorgegebenen Daten und/oder Botschaften über diesen Übertragungsweg V erfolgt über ein Steuerwerk 309, welches insbesondere als Finite-State-Machine, also eine Zustandsmaschine oder ein Zustandsautomat (endlicher Automat, Finite-State-Machine FSM) ausgebildet ist. Dieses Steuerwerk 309, insbesondere als Zustandsmaschine oder Zustandsautomat, kann zum Einen in einem Kommunikationsbaustein selbst untergebracht sein oder kann diesem zugeordnet sein und außerhalb lokalisiert werden. Insbesondere kann dieses Steuerwerk in einer Ausführungsform im Teilnehmer, also im Host und nicht im Kommunikationsbaustein enthalten sein. Über diesen zweiten zusätzlichen Datenpfad, den Übertragungsweg V, können nun vorteilhafter Weise mehrere Kommunikationsbausteine zu einem Gateway, insbesondere kaskadiert zusammengeschaltet werden. Die Gateway Finite-State-Machine 309 steuert dann über die Ausgänge 310, 311 und 312 die Übertragung auf dem zweiten Übertragungsweg V, in dem damit zum Einen die Daten bzw. Botschaften insbesondere auf Bitebene festgelegt werden können, die zwischen den Kommunikationsbausteincn übermittelt werden sollen und zum Anderen festgelegt wird, welcher Kommunikationsbaustein an welchen anderen was überträgt. D. h. damit können aus Übertragungszwischenspeichern 306, 307 und 308 Daten ausgewählt sowie Daten in diese eingeschrieben werden über so genannte Schreib-Auswahl-Signale WRS, write select oder Lese-Auswahl-Signale, read select, RDS. Damit ist es nun möglich, die verschalteten Kommunikationsbausteine über den zweiten Datenpfad V Daten und/oder Botschaften sehr schnell zwischen allen Kommunikationsbausteinen zu übertragen. Insbesondere kann auch eine Botschaft gleichzeitig von einem Kommunikationsbaustein zu mehreren anderen Kommunikationsbausteinen übertragen werden. Darüber ist es weiterhin möglich, Botschaften neu zusammenzustellen aus bereits vorhandenen Botschaften und diese gezielt zu übertragen. Die Steuerung dieser Gateway-Funktion, also welche Botschaft von welchem Bus zu welchem anderen Bus weitergeleitet werden soll über den direkten Datenpfad V, erfolgt über das genannte Gateway-Steuerwerk 309, also die Gateway-Finite-State-Machine, welches entweder als eigene State-Machine in Hardware aufgebaut ist oder auch in Software insbesondere im Host läuft und über genannte spezielle Register z. B. über Communication Request Register oder Communication Mask Register, so ebenfalls enthalten in den Blöcken 306 bis 308 zugreift. Damit ist vorteilhafter Weise die schnelle Daten- oder Botschaftsübertragung und eine hohe Flexibilität, insbesondere freie Konfigurierbarkeit der Anzahl der Busanschlüsse sowie eine hohe Flexibilität bezüglich der Zusammenstellung und des Aufbaus des Gateways möglich.

Weiterhin ist optional ein Modul als Datenintegrationseinheit, Data-Integration-Unit DIU 500 dargestellt. Dieses ist über den Eingang CIS (Cascade Input des Schnittstellenmoduls) und einen Ausgang COS (Cascade Output dieses Schnittstellenmoduls) in den Datenpfad V eingebunden. Dazu ist das Schnittstellenmodul 500, also der DIU über CIS mit CON und über COS mit CI1 oder mit CI(n+1) verbunden. Es können somit beliebig viele Kommunikationsbausteine sowie eine beliebige Anzahl solcher Datenintegrationseinheiten DIU500 zu einem Gateway zusammengeschaltet werden. Sie werden dann dazu, wie dargestellt, insbesondere ringförmig, jeweils von Cascadc Output zu Cascade Input verbunden. Der CPU-Bus 313 ist damit um eine weitere Verbindung 313a zum Gesamtbus 403 erweitert, um ein zweites Steuerwerk, das Steuerwerk 401 für die Datenintegrationseinheit 500 anzubinden. Dieses Steuerwerk 401 ist wie das Steuerwerk 309 als Zustandsmaschine oder Zustandsautomat (endlicher Automat, Finite-State-Machine FSM) darstellbar. Dieses Steuerwerk 401, insbesondere als Zustandsmaschine oder als Zustandsautomat, kann zum Einen der Datenintegrationseinheit 500 selbst untergebracht sein oder kann diesem zugeordnet sein und außerhalb lokalisiert werden. Insbesondere kann es in einer Ausführungsform im Hostteilnehmer enthalten sein.

In einer weiteren Ausführungsfonn ist es direkt in einem Kommunikationsbaustein, z. B. 301 oder 305 untergebracht. Auch die dargestellte Trennung zwischen Steuerwerk 309 und Steuerwerk 401 ist zwar vorteilhaft, aber nicht zwingend. So können die Steuerwerke 309 und 401 in einem Steuerwerk vereint sein, für das dann bezüglich dessen Position/Lokalisation die vorgenannten Überlegungen ebenso gelten. Über diese Datenintegrationseinheit 500 können somit weitere Daten, insbesondere externe Daten bezüglich des Gateways in den Übertragungsweg V und damit zur Übertragung an die Kommunikationsbausteine angekoppelt werden.

Die genannten Vorteile und Verwendungsangaben bezüglich des Übertragungsweges V beziehen sich nun auf alle im Gateway zusammengefassten Kommunikationsbausteine sowie die Datenintegrationseinheit. Aus den eingangs genannten Überlegungen ist es nun aber erforderlich, insbesondere die zeitgesteuerten Busse, also deren Kommunikationsbausteine automatisch zu synchronisieren, um Probleme bezüglich Datenkonsistenzen veralteter Daten, gleichzeitiger Interrupts, gleichzeitiger Bearbeitung von Aufgaben usw. zu vermeiden. Gleichzeitig soll auch wie beim Kaskadenring, also dem Übertragungsweg V eine Belastung des Hostprozessors im Rahmen der Synchronisation vermieden werden. Dazu ist die Triggerverbindungsstruktur 600 dargestellt. Dazu sind Triggerausgänge (Time Mark Interrupt Out) TMIO1 bzw. TMIO2 des entsprechenden Kommunikationsbausteins mit Eingängen des jeweils anderen Kommunikationsbausteins, hier auf TTCAN bezogen, als Stop-Watch-Eingänge (Stop Watch Trigger In) SWTI1 bzw. SWTI2 über die Verbindungen 601 bzw. 602 verbunden. Diese Verbindung kann als Ring ebenso wie in Sternstruktur ausgebildet sein. Insbesondere sind die Verbindungen 601 und 602 als Punkt-zu-Punkt-Verbindung vorteilhafter Weise als serielle Bitleitung insbesondere Einzelbitleitungen ausgeführt.

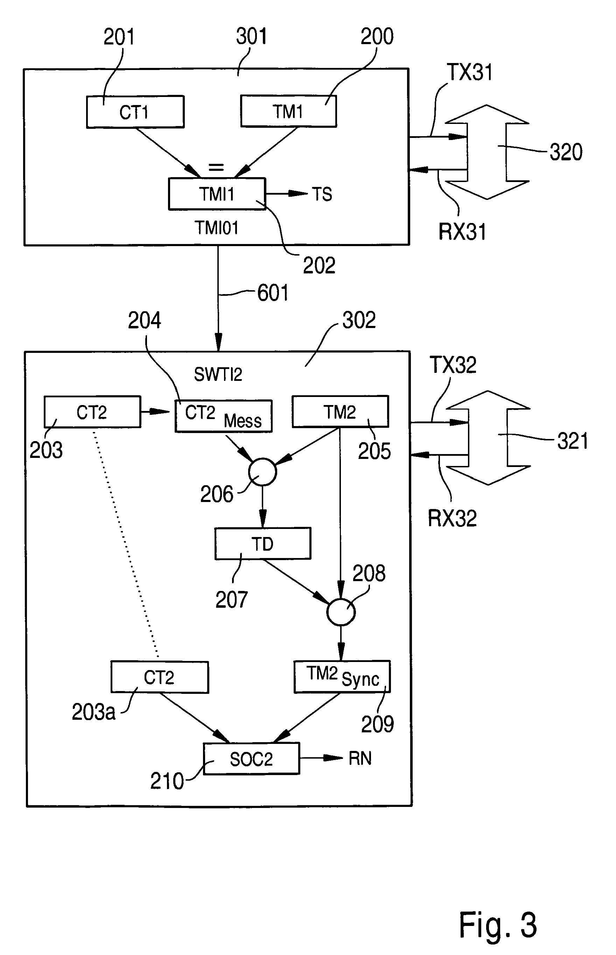

D. h. die Synchronisierung der zeitgesteuerten Bussysteme, hier 320 und 321 erfolgt mittels der im Gateway enthaltenen und diesen Bussystemen zugeordneten Kommunikationsbausteinen, hier 301 und 302, in dem eine zusätzliche Synchronisationsanordnung oder Triggerleitungsanordnung 600 vorgesehen wird. Diese Synchronisationsanordnung 600 ermöglicht dann die im Folgenden in Figur 3 beschriebene Synchronisation der zeitgesteuerten Bussysteme.

In Figur 3 sind dazu erneut die Kommunikationsbausteine 301 und 302 dargestellt, welche über eine Verbindung 601 direkt gekoppelt sind. Mit 320 und 321 sind wiederum die wenigstens beiden zeitgesteuerten Bussysteme dargestellt, und über TX31 bzw. TX32 und RX31 bzw. RX32 wiederum die bidirektionale Ankopplung der Kommunikationsbausteine an die zeitgesteuerten Bussysteme. In einem ersten Kommunikationsbaustein liegt nun eine erste Triggerinformation TMI1 im Block 202 vor, durch welche im ersten Bussystem 320 ein Triggersignal ausgelöst wird. Dies erfolgt durch den Kommunikationsbaustein selbst, wobei es unerheblich ist, ob er Zeitmaster in diesem Bussystem ist, oder aber einen anderer Teilnehmer, die Zeitmasterfunktion innehat. Die erste Triggerinformation ergibt sich beispielsweise dadurch, dass eine Zeitmarke (Time Mark) TM1 in einem Speicherbereich 200 insbesondere einem Register vorliegt. Eine erste Zeitinformation CT1 (Cycle Time) als Zykluszeit des ersten Bussystems erreicht die Zeitmarke TM1, wodurch bei Erreichen der Time Mark Interrupt TMI1, also die erste Triggerinformation, erzeugt wird. Die Zykluszeit im ersten Bussystem ist abhängig davon gegeben, ob es sich bei dem ersten Kommunikationsbaustein 301 um einen Zeitmaster oder einen Slave handelt. Handelt es sich um einen Zeitmaster, so ist die Eigenzeit des Kommunikationsbausteins bereits entsprechend der globalen Zeit des Bussystems 320 und damit direkt als Zykluszeit gegeben. Handelt es sich bei Kommunikationsbaustein 301 um einen Slave, so muss erst die eigene Zeit auf die globale Zeit des Bussystems korrigiert werden, um die korrekte Zykluszeit zu erhalten.

Liegt die erste Triggerinformation TMI1 vor, wird diese über die Verbindung 601 über den Ausgang TMIO1 an den Eingang SWTI2 des Kommunikationsbausteins 302 übertragen und kann beispielsweise dort in einem Register eingetragen werden. Die Vorrichtung beruht also darauf, dass ein Registerwert, also die Zeitmarke des ersten Bussystems, Time Marked Bus 1 TM1 im Protokoll-Controller, also den Kommunikationsbaustein des Masternetzwerkes oder Masterbussystems vorgegeben wird und mit der Zeitbasis, also der Cycle Time vom Bus 1 CT1 des Kommunikationsbausteins verglichen wird. Sind beide Werte identisch, wird der Interrupt also der Time Mark Interrupt 1 TMI1 ausgelöst. Wie erwähnt, wird der Interrupt nun zum weiteren Protokoll-Controller, also dem Kommunikationsbaustein 302 eines zu synchronisierenden Bussystems an den Eingang SWTI2 übertragen. Darüber wird nun eine Messung des aktuellen Zeitpunktes ausgelöst. Hierzu steht im Bussystem 321, also dem zweiten Bussystem, ebenso eine globale Zeit zur Verfügung, aus der die Zykluszeit ableitbar ist. Diese Zeitbasis, Cycle Time Bus 2 wird abhängig von der ersten Triggerinformation TMI1 erfasst, was zu dem entsprechenden Messwert CT2_{Mess}, also dem Zeitinformationswert führt, welcher ebenfalls in einem Register, insbesondere hier Speicherbereich 204 eingetragen bzw. übertragen wird. Dieser Zeitinformationswert CT2_{Mess} wird nun mit einer Zeitmarke des zweiten Bussystems insbesondere als weiteren vorgegebenen Registerwert TM2 verglichen, wobei diese Time Mark des Bus 2, also TM2 dem erwarteten Zeitpunkt des Interrupts entspricht. Dieser Vergleich erfolgt über Vergleichsmittel 206, insbesondere durch Differenzbildung. Daraus ergibt sich dann ein Zeitunterschied oder eine Zeitdifferenz TD (Time Difference) zwischen CT2_{Mess} und TM2 aus Speicherbereich 205 insbesondere Register 205. Dieser ermittelte Zeitunterschied TD wird beispielsweise in einen Speicherbereich 207 insbesondere ein Register eingetragen und über Verknüpfungsmittel 208 mit der Zeitmarke TM2 verknüpft. Dies kann zum Einen über Summen bzw. Differenzbildung bestehen, insbesondere je nach Vorzeichen des Zeitunterschiedes TD. Es ist aber auch eine Verknüpfung über Multiplikation respektive Division denkbar, indem ein Zeitfaktor oder ein Zeitquotient beaufschlagt wird, um eine angepasste Zeitmarke zur Synchronisierung TM2_{Sync} entsprechend Block 209 zu erhalten. Erreicht nun die Zeitinformation CT2 diese angepasste Zeitmarke TM2_{Sync}, welche sich aus dem Zeitunterschied TD und der ursprünglichen Zeitmarke TM2 ergibt, wird entsprechend Block 210 (SOC - Start of Cycle - Auslösen eines neuen Kommunikationszyklusses) dann die nächste Referenznachricht im Bussystem 321 jetzt synchronisiert zu Bussystem 320 ausgelöst. Als Synchronisationspunkt kann jeder beliebige Zeitpunkt eines Basis- oder Matrixzyklus verwendet werden.

D. h. dass keine Synchronisation der Netzwerke respektive Bussysteme durch eine Verschiebung des Time Triggers ohne Einfügen eines Time-Gap erfolgen. Dazu wird ein Differenzwert TD positiv oder negativ, der einer gemessenen oder errechneten Abweichung vom gewünschten Time Trigger entspricht, in ein Register des Kommunikationsbausteins des zu synchronisierenden Bussystems geschrieben und die entsprechende Verschiebung aktiviert, d. h. eben ein neuer SOC-Wert SOC2 abhängig von einem angepassten Time Mark TM2_{Sync} ausgelöst. Der Kommunikationsbaustein beginnt nun die nächste Referenznachricht, wenn die Zykluszeit oder Cycle Time, also die aktuelle Zeit des Kommunikationszyklus die Verknüpfung, also insbesondere die Summe der Zeitmarke oder Time Mark und des Zeitunterschiedes, also des Differenzwertes erreicht. Nun können entweder alle folgenden Referenznachrichten zur entsprechenden angepassten Zeitmarke TM2_{Sync} gesendet werden, oder dieser Vorgang erfolgt nur einmalig und die nächsten Referenznachrichten werden wieder mit der üblichen Zeitmarke TM2 gesendet. Ist die zeitliche Verschiebung zwischen beiden Netzwerken zu groß, um sie in einem Kommunikationszyklus aufeinander zu synchronisieren und das Einfügen eines Time-Gap aufgrund der dabei nicht stattfinden Kommunikation nicht möglich, kann ebenso ein Maximalwert, insbesondere über ein Register konfiguriert, vorgegeben werden, der als Begrenzung der Zeitdifferenz in beide Richtungen wirkt, Verlängerung und Verkürzung des Kommunikationszyklus, verwendet werden kann. Die Synchronisation der beiden Netzwerke erfolgt dann stufenweise.

D. h. also, der ermittelte Zeitunterschied TD wird automatisch im nächsten Kommunikationszyklus zur entsprechenden Zeitmarke hinzuverknüpft insbesondere vorzugsweise addiert (je nach Vorzeichen und Umständen auch subtrahiert) und die Verschiebung eingeschaltet. Der Kommunikationsbaustein triggert dann die nächste Referenznachricht, wenn die Zykluszeit, also hier CT2 insbesondere der Summe aus Zeitmarke TM2 und Zeitdifferenz, Zeitunterschied TD, also der Synchronisationsmarke TM2_{Sync} entspricht. Ist nun der Kommunikationsbaustein des Slave-Bussystems nicht der Zeitmaster oder Time Master, wird der Zeitunterschied an den Zeitmaster übertragen oder auch die neue Synchronisationszeitmarke TM2_{Sync} an den Time Master übertragen, der dann die Abweichung zu Beginn des nächsten Kommunikationszyklus korrigiert respektive einstellt.

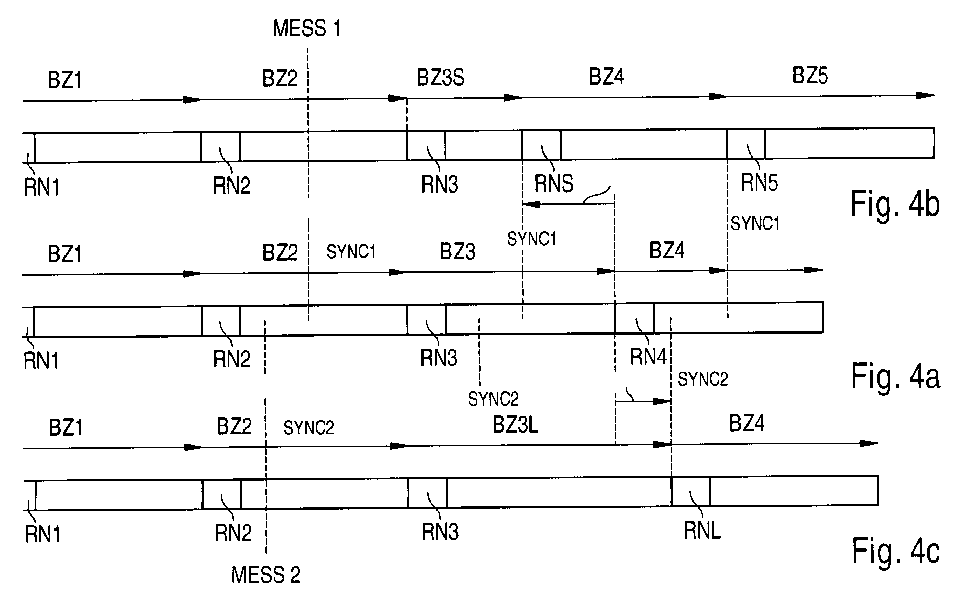

Anhand Figur 4 bestehend aus den Figuren 4a, 4b und 4c soll nun noch mal ein beispielhafter Synchronisationsverlauf dargestellt werden. Figur 4a zeigt dazu eine Abfolge von 4 Basiszyklen, BZ1 bis BZ4, eingeleitet durch die entsprechenden Referenznachrichten RN1 bis RN4, wobei diese eben wiederholt in einem konstanten zeitlichen Abstand übermittelt werden. Dadurch erhalten alle Basiszyklen BZ1, BZ2, BZ4 und insbesondere BZ3 die gleiche Länge. In Figur 4b erfolgt nun eine Synchronisation auf den Synchronisationspunkt SYNC1 des ersten Bussystems aus Figur 4a, wodurch sich nun der Basiszyklus BZ3 verkürzt. Die Basiszyklen BZ1 und BZ2 haben die ursprüngliche Länge ausgelöst durch die Referenznachrichten RN1 und RN2. RN3 nun, also Referenznachricht des Basiszyklus 3, löst diesen ganz normal wie vorgegeben aus. Die nächste Referenznachricht RNS wird aber durch die entsprechende Zeitmarke, bzw. den Zeitmarkenwert aus TD und TM2 also TM2Sync, die in Basiszyklus 2 durch Auslösen des TMI des Netzwerkes aus Figur 4a an der Synchronisationsmarke SYNC/MESS1 des Netzwerkes aus Figur 4b ermittelt und im Kommunikationsbaustein des zweiten Netzwerkes (ebenfalls 4b) aus gemessenem und erwarteter Synchronisationsmarke berechnet wird und die darauf beruhendeStart-of-Cycle-Information SOC2 so ausgelöst, dass der Basiszyklus 4 deutlich früher beginnt. Dadurch wird der Basiszyklus 3 zu BZ3S verkürzt. An diesen schließt sich dann der Basiszyklus 4 und ein normaler Basiszyklus 5, ausgelöst durch eine Referenznachricht RN5, an.

In Figur 4c sind wieder die üblichen beiden ersten Basiszyklen BZ1 und BZ2, ausgelöst durch die Referenznachrichten RN1 und RN2, dargestellt. Auch RN3 wird in einem zeitlich vorgebbaren, hier zu RN1 und RN2 äquidistanten Abstand gestartet. Allerdings wird die nachfolgende Referenznachricht RNL eben durch die entsprechende Zeitmarke, bzw. den Zeitmarkenwert aus TD und TM2 also TM2Sync später gestartet durch das spätere Auslösen der Start-of-Cycle-Information SOC2, als in Figur 4a dargestellt. Das heißt, der Basiszyklus 4, BZ4, wird erst durch RNL später ausgelöst. Dadurch verlängert sich der Basiszyklus 3 zu BZ3L bzw. der neue Basiszyklus BZ4 wird später gestartet, wie in Figur 4c dargestellt.

Damit ist eine einfache automatische Synchronisierung zweier zeitgesteuerter Bussysteme insbesondere über ein Gateway möglich.

Sollen mehr als zwei Bussysteme oder Netzwerke miteinander synchronisiert werden, stellt wiederum ein Bussystem das Masterbussystem dar, auf das sich alle anderen Bussysteme oder Netzwerke synchronisieren. Zur Synchronisation wird dann das erste Signal, also die erste Triggerinformation TMI1 des Masternetzwerkes an die Eingänge SWT1 aller anderen zu synchronisierenden Bussysteme übermittelt.

Die Synchronisation ist somit in beide Richtungen möglich und kann bei Verwendung eines Time Masters im Slave-Bus-System ohne den Zugriff eines Host-Controllers und unabhängig von Latenzzeiten durchgeführt werden. In mehreren unabhängigen Bussystemen kann ein Interrupt oder eine Aufgabe/Task gleichzeitig ausgelöst werden, ohne eine spezielle Nachricht zu senden. Die Synchronisation der Netzwerke erfolgt unabhängig von den verwendeten Datenraten und Kommunikationszyklen unter der Bedingung, dass das Verhältnis der Kommunikationszyklen ganzzahlige Vielfache voneinander darstellt.

## Patentansprüche

1. Vorrichtung zur Synchronisation wenigstens zweier Bussysteme mit einem ersten Kommunikationsbaustein für ein erstes Bussystem und einem zweiten Kommunikationsbaustein für ein zweites Bussystem, wobei in dem ersten Kommunikationsbaustein eine erste Triggerinformation (TMI1) vorliegt, durch welche im ersten Bussystem ein Triggersignal (TS) ausgelöst wird, wobei die Vorrichtung derart ausgebildet ist, dass der erste und der zweite Kommunikationsbaustein in einem Gateway (100) als Verbindung der zu synchronisierenden Bussysteme enthalten und über eine erste Verbindung (V) verbunden sind und weiterhin über eine zusätzliche Triggerleitungsanordnung (600) in Verbindung stehen und dass die erste Triggerinformation (TMI1) in form eines Interrupts an den zweiten Kommunikationsbaustein über die Triggerleitungsanordnung (600) übertragen wird, und der zweite Kommunikationsbaustein derart ausgebildet ist, dass aus der ersten Triggerinformation (TMI1) ein Zeitinformationswert (CT2Mess) ermittelt wird und dieser Zeitinformationswert (CT2Mess) mit einer zweiten Zeitmarke (TM2) des zweiten Bussystems verglichen wird, wobei ein Zeitunterschied (TD) ermittelt wird und die nächste Referenznachricht (RN) im zweiten Bussystem abhängig von der zweiten Zeitmarke (TM2) und dem Zeitunterschied (TD) ausgelöst wird.

2. Vorrichtung nach Anspruch 1, wobei der erste Kommunikationsbaustein einem Zeitmaster, potentiellen Zeitmaster oder einem Slave des ersten Bussystems entspricht und derart ausgebildet ist, dass er ein Triggersignal (TS) wiederholt in einem vorgebbaren zeitlichen Abstand überträgt, ausgelöst durch die erste Triggerinformation (TMI1) überträgt, wenn eine erste Zeitinformation (CT1) eine der ersten Triggerinformation (TM1) zugeordnete erste Zeitmarke (TM1) erreicht.

3. Vorrichtung nach Anspruch 1, wobei ein erster Speicherbereich im zweiten Kommunikationsbaustein vorgesehen ist, in welchen der zweite Zeitinformationswert (CT2Mess) abgelegt wird.

4. Vorrichtung nach Anspruch 3, wobei ein zweiter Speicherbereich vorgesehen ist, in welchen die zweite Zeitmarke (TM2) abgelegt wird.

5. Vorrichtung nach Anspruch 4, wobei ein dritter Speicherbereich vorgesehen ist, in welchen der Zeitunterschied (TD) abgelegt wird.

6. Vorrichtung nach Anspruch 3, 4 oder 5, wobei der Speicherbereich als Register ausgebildet ist.

7. Vorrichtung nach Anspruch 1, wobei der zweite Kommunikationsbaustein einem Zeitmaster des zweiten Bussystems entspricht und derart ausgebildet ist, dass dieser die nächste Referenznachricht (RN) im zweiten Bussystem auslöst, wenn eine zweite Zeitinformation (CT2) die Summe aus der zweiten Zeitmarke (TM2) und dem Zeitunterschied (TD) erreicht.

8. Vorrichtung nach Anspruch 1, wobei zweite Kommunikationsbaustein einem Slave im zweiten Bussystem entspricht und derart ausgebildet ist, dass eine zweite Triggerinformation (TMI2) an einen dritten Kommunikationsbaustein, der Zeitmaster im zweiten Bussystem ist, übertragen wird, wenn eine zweite Zeitinformation (CT2) die Summe aus der zweiten Zeitmarke (TM2) und dem Zeitunterschied (TD) erreicht.

9. Vorrichtung nach Anspruch 1, wobei der erste und zweite Kommunikationsbaustein über einen direkten Verbindungsweg derart verbunden sind, dass die erste Triggerinformation (TMI1) direkt in ein Register des zweiten Kommunikationsbausteins eingeschrieben wird.

10. Vorrichtung nach Anspruch 9, wobei der direkte Verbindungsweg als Punkt zu Punkt Verbindung ausgeführt ist.

11. Vorrichtung nach Anspruch 9, wobei der direkte Verbindungsweg als serielle Bitleitung ausgeführt ist.

12. Anordnung aus wenigstens zwei Bussystemen mit einer Vorrichtung zur Synchronisation wenigstens zweier Bussysteme mit einem ersten Kommunikationsbaustein für ein erstes Bussystem und einem zweiten Kommunikationsbaustein für ein zweites Bussystem, wobei in dem ersten Kommunikationsbaustein eine erste Triggerinformation (TMI1) vorliegt, durch welche im ersten Bussystem ein Triggersignal (TS) ausgelöst wird, wobei die Vorrichtung derart ausgebildet ist, dass der erste und der zweite Kommunikationsbaustein in einem Gateway (100) als Verbindung der zu synchronisierenden Bussysteme enthalten und über eine erste Verbindung (V) verbunden sind und weiterhin über eine zusätzliche Triggerleitungsanordnung (600) in Verbindung stehen und dass die erste Triggerinformation (TMI1) in form eines Interrupts an den zweiten Kommunikationsbaustein über die Triggerleitungsanordnung (600) übertragen wird, und der zweite Kommunikationsbaustein derart ausgebildet ist, dass aus der ersten Triggerinformation (TMI1) ein Zeitinformationswert (CT2Mess) ermittelt wird und dieser Zeitinformationswert (CT2Mess) mit einer zweiten Zeitmarke (TM2) des zweiten Bussystems verglichen wird, wobei ein Zeitunterschied (TD) ermittelt wird und die nächste Referenznachricht (RN) im zweiten Bussystem abhängig von der zweiten Zeitmarke (TM2) und dem Zeitunterschied (TD) ausgelöst wird.

## Claims

1. Apparatus for synchronizing at least two bus systems having a first communication chip for a first bus system and a second communication chip for a second bus system, wherein the first communication chip contains a first trigger information item (TMI1) which initiates a trigger signal (TS) in a first bus system, wherein the apparatus is in a form such that the first and second communication chips are held in a gateway (100) as a connection to the bus systems to be synchronized and are connected by means of a first connection (V) and are also in contact via an additional trigger line arrangement (600) and wherein the first trigger information item (TMI1) is transmitted in the form of an interrupt to the second communication chip via the trigger line arrangement (600), and the second communication chip is in a form such that a time information value (CT2Mess) is ascertained from the first trigger information item (TMI1) and this time information value (CT2Mess) is compared with a second time marker (TM2) of the second bus system, wherein a time difference (TD) is ascertained and the next reference message (RN) is initiated in the second bus system on the basis of the second time marker (TM2) and the time difference (TD).

2. Apparatus according to Claim 1, wherein the first communication chip corresponds to a time master, potential time master or to a slave of the first bus system and is in a form such that it transmits a trigger signal (TS) repeatedly at a prescribable interval of time, when initiated by the first trigger information item (TMI1), when a first time information item (CT1) reaches a first time marker (TM1) associated with the first trigger information item (TMI1).

3. Apparatus according to Claim 1, wherein a first memory area is provided in the second communication chip and is used to store the second time information value (CT2Mess).

4. Apparatus according to Claim 3, wherein a second memory area is provided which is used to store the second time marker (TM2).

5. Apparatus according to Claim 4, wherein a third memory area is provided which is used to store the time difference (TD).

6. Apparatus according to Claim 3, 4 or 5, wherein the memory area is in the form of a register.

7. Apparatus according to Claim 1, wherein the second communication chip corresponds to a time master of the second bus system and is a form such that it initiates the next reference message (RN) in the second bus system when a second time information item (CT2) reaches the sum of the second time marker (TM2) and the time difference (TD).

8. Apparatus according to Claim 1, wherein the second communication chip corresponds to a slave in the second bus system and is a form such that a second trigger information item (TMI2) is transmitted to a third communication chip, which is a time master in the second bus system, when a second time information item (CT2) reaches the sum of the second time marker (TM2) and the time difference (TD).

9. Apparatus according to Claim 1, wherein the first and second communication chips are connected by means of a direct connecting path such that the first trigger information item (TMI1) is written directly to a register of the second communication chip.

10. Apparatus according to Claim 9, wherein the direct connecting path is in the form of a point-to-point connection.

11. Apparatus according to Claim 9, wherein the direct connecting path is in the form of a serial bit line.

12. Arrangement comprising at least two bus systems having an apparatus for synchronizing at least two bus systems having a first communication chip for a first bus system and a second communication chip for a second bus system, wherein the first communication chip contains a first trigger information item (TMI1) which initiates a trigger signal (TS) in the first bus system, wherein the apparatus is in a form such that the first and second communication chips are held in a gateway (100) as a connection for the bus systems to be synchronized and are connected by means of a first connection (V) and are also in contact via an additional trigger line arrangement (600) and wherein the first trigger information item (TMI1) is transmitted in the form of an interrupt to the second communication chip via the trigger line arrangement (600), and the second communication chip is in a form such that a time information value (CT2Mess) is ascertained from the first trigger information item (TMI1) and this time information value (CT2Mess) is compared with a second time marker (TM2) of the second bus system, wherein a time difference (TD) is ascertained and the next reference message (RN) is initiated in the second bus system on the basis of the second time marker (TM2) and the time difference (TD).

## Revendications

1. Dispositif de synchronisation d'au moins deux systèmes de bus,
le dispositif présentant un premier module de communication pour un premier système de bus et un deuxième module de communication pour un deuxième système de bus,
une première information de déclenchement (TMI1) par laquelle un signal d'activation (TS) est déclenché dans le premier système de bus étant appliquée dans le premier module de communication,
le dispositif étant configuré de telle sorte que le premier et le deuxième module de communication sont prévus dans un portail (100) comme liaison entre les systèmes de bus à synchroniser, sont reliés par une première liaison (V) et sont en outre raccordés par un système supplémentaire (600) de conducteurs d'activation,
la première information d'activation (TMI1) qui présente la forme d'un signal d'interruption étant transférée au deuxième module de communication par le système (600) de conducteurs d'activation et le deuxième module de communication étant configuré de manière à déterminer une valeur d'information temporelle (CT2Mess) à partir de la première information d'activation (TMI1) et à comparer cette valeur d'information temporelle (CT2Mess) à un deuxième repère temporel (TM2) du deuxième système de bus pour déterminer une différence temporelle (TD) et déclencher le message de référence (RN) suivant dans le deuxième système de bus en fonction du deuxième repère temporel (TM2) et de la différence de temps (TD).

2. Dispositif selon la revendication 1, dans lequel le premier module de communication correspond à un maître du temps, à un maître potentiel du temps ou à un esclave du premier système de bus et est configuré de manière à transmettre un signal d'activation (TS) de manière répétée à intervalles de temps prédéterminés déclenchés par la première information d'activation (TMI1) lorsqu'une première information temporelle (CT1) atteint un premier repère temporel (TM1) associé à la première information d'activation (TMI1).

3. Dispositif selon la revendication 1, dans lequel une première zone de mémoire dans laquelle la deuxième valeur d'information temporelle (CT2Mess) est conservée est prévue dans le deuxième module de communication.

4. Dispositif selon la revendication 3, qui présente une deuxième zone de mémoire dans laquelle le deuxième repère temporel (TM2) est conservé.

5. Dispositif selon la revendication 4, qui présente une troisième zone de mémoire dans laquelle la différence de temps (TD) est conservée.

6. Dispositif selon les revendications 3, 4 ou 5, dans lequel la zone de mémoire est configurée comme registre.

7. Dispositif selon la revendication 1, **caractérisé en ce que** le deuxième module de communication correspond à un maître du temps du deuxième système de bus et est configuré de manière à déclencher le message de référence (RN) suivant dans le deuxième système de bus lorsqu'une deuxième information temporelle (CT2) atteint la somme du premier repère temporel (TM2) et de la différence de temps (TD).

8. Dispositif selon la revendication 1, dans lequel le deuxième module de communication correspond à un esclave du deuxième système de bus et est configuré de manière à transmettre une deuxième information d'activation (TMI2) à un troisième module de communication qui forme un maître du temps dans le deuxième système de bus lorsqu'une deuxième information temporelle (CT2) atteint la somme du deuxième repère temporel (TM2) et de la différence de temps (TD).

9. Dispositif selon la revendication 1, dans lequel le premier et le deuxième module de communication sont reliés par un parcours de liaison directe de telle sorte que la première information d'activation (TMI1) soit écrite directement dans un registre du deuxième module de communication.

10. Dispositif selon la revendication 9, dans lequel le parcours de liaison directe est configuré comme liaison point à point.

11. Dispositif selon la revendication 9, dans lequel le parcours de liaison directe est configuré comme conducteur de bits série.

12. Système constitué d'au moins deux systèmes de bus et d'un dispositif de synchronisation d'au moins deux systèmes de bus,
qui présente un premier module de communication pour un premier système de bus et un deuxième module de communication pour un deuxième système de bus,
une première information d'activation (TMI1) par laquelle un signal d'activation (TS) est déclenché dans le premier système de bus étant appliquée dans le premier module de communication,
le dispositif étant configuré de telle sorte que le premier et le deuxième module de communication sont prévus dans un portail (100) comme liaison entre les systèmes de bus à synchroniser, sont reliés par une première liaison (V) et sont en outre raccordés par un système supplémentaire (600) de conducteurs d'activation,
la première information d'activation (TMI1) qui présente la forme d'un signal d'interruption étant transférée au deuxième module de communication par le système (600) de conducteurs d'activation et le deuxième module de communication étant configuré de manière à déterminer une valeur d'information temporelle (CT2Mess) à partir de la première information d'activation (TMI1) et à comparer cette valeur d'information temporelle (CT2Mess) à un deuxième repère temporel (TM2) du deuxième système de bus pour déterminer une différence temporelle (TD) et déclencher le message de référence (RN) suivant dans le deuxième système de bus en fonction du deuxième repère temporel (TM2) et de la différence de temps (TD).
